# EUROPEAN PATENT SPECIFICATION

(11) **EP 3 447 875 B1**
(45) Date of publication and mention of the grant of the patent: **16.03.2022**
(21) Application number: 17465542.3
(22) Date of filing: 23.08.2017
(51) Int. Cl.: H02J 5/00, H02J 7/00, H02J 7/02, H02J 50/12, H02J 50/60

(54) **DEVICE AND METHOD FOR PREVENTING NFC CARD DESTRUCTION BY A WIRELESS CHARGING SYSTEM**
VORRICHTUNG UND VERFAHREN ZUR VERHINDERUNG DER ZERSTÖRUNG EINER NFC-KARTE DURCH EIN DRAHTLOSES LADESYSTEM
DISPOSITIF ET PROCÉDÉ PERMETTANT D'ÉVITER LA DESTRUCTION DE CARTE NFC PAR UN SYSTÈME DE CHARGE SANS FIL

(43) Date of publication of application: 27.02.2019
(73) Proprietor: Continental Automotive GmbH, 30165 Hannover (DE)
(72) Inventor: Craciun, Serban, 325400 Caransebes (RO)
(74) Representative: Continental Corporation

(56) References cited:
- US-A1- 2011 221 388
- US-A1- 2016 322 853
- US-A1- 2017 085 297

## Description

### FIELD OF THE INVENTION

The present invention relates to the field of NFC card systems. Particularly, the present invention relates to a device for preventing NFC card destruction by a wireless charging system and a corresponding method.

US 2017/085297 A1 suggests to interleave NFC and A4WP wireless charging signals and time- multiplex them.

US2017085297A1 and US2011221388A1 concern devices for preventing NFC card destruction during wireless charging operations, the device comprising a magnetic field detection circuit, which is configured to measure an intensity of a magnetic field generated by a wireless charging system; a NFC-card detection circuit, which is configured to detect a presence of a NFC card; a charging control circuit, which is configured to limit a transmitted Power of the wireless charging system during wireless charging operations based on a maximum permitted field, wherein the maximum permitted field is related to the detected presence of the NFC card.

### BACKGROUND OF THE INVENTION

With the introduction of the new standards for Qi wireless power transfer for medium power chargers (TX power > 5W) , the generated magnetic field is high enough to destroy an

NFC card if it is present between the phone and the wireless charger.

There are two standards, each of which defines the maximum filed intensity limit, at which the NFC card shall withstand:
- 7.5A/m for NFC cards based on ISO 14443
- 5A/m for NFC card based on lS0 15693

The disadvantages of the prior art are that a wireless charging station needs to integrate NFC function.

The methods for preventing the destruction of an NFC card is to scan, before starting the wireless charging, for the presence of NFC devices. If a NFC card is detected then the wireless charging of the smartphone battery will not start. This method involves having NFC function in the wireless charging base station.

### SUMMARY OF THE INVENTION

There may be a need to improve charging devices to avoid NFC card damages.

These needs are met by the subject-matter of the independent claims. Further exemplary embodiments are evident from the dependent claims and the following description.

An aspect of the present invention relates to a device for preventing NFC card destruction during wireless charging operations, is specified by claim 1.

The proposed idea intend to add to the wireless charging station, a circuit that will measure the magnetic field (H) generated by the charger, and based on card presence and type (ISO 11443 or ISO 15693) detection, and on measured magnetic field to take the decision to limit the transmitted power of the wireless charger.

The measuring circuit may comprise using a wire loop (single or multiple loops) tuned with a parallel capacitor at 13.56 MHz {which is the operating frequency of the NFC cards).

That wire loop may be placed above the transmitting coil of the wireless charger, in which the magnetic field generated by the charger. This will induce an AC voltage. The AC voltage will be then rectified with a Schottky Diode - also known as hot carrier diode - or a bridge of diodes and after that the rectified voltage, smoothed with a capacitor will be measured with an ADC input pin of the microcontroller.

According to the wire loop characteristics (loop size and wire size) a formula to correlate the received DC voltage and the magnetic field can be determined.

The sensing loop can be made on an FR4 or flex foil PCB placed above the charging coil, as a separate loop used only for field sensing or shared with the existing NFC antenna (the NFC antenna will be used also to measure the induced magnetic field).

The detection mechanism will be as follows:
1) NFC reader integrated in wireless charger scans for existing NFC devices;
2) If no devices are detected, then start normal charging;
3) If NFC cards are detected, then start charging and monitor in the same time the intensity of the magnetic field induced at 13.56 MHz;
4) If the maximum permitted field by the card type detected (Hmax) is exceeded, then the transmitted power of the wireless charger is limited in order to have the magnetic field which passes through the card under Hmax.

A further, second aspect of the present invention relates to a method for preventing NFC card destruction during wireless charging operations, and is specified by claim 7.

According to an exemplary embodiment of the present invention, the charging control circuit is configured, if no devices are detected by the NFC-card detection circuit, to start normal wireless charging operations, wherein the charging control circuit is configured, if NFC cards are detected, to start limited wireless charging operations and the magnetic field detection circuit is configured to measure, the intensity of the magnetic field induced at the radio frequency band of NFC cards.

According to an exemplary embodiment of the present invention, the charging control circuit is configured, if the maximum permitted field is exceeded by the intensity of the magnetic field, to reduce the transmitted power of the wireless charger in order to have the magnetic field which passes through the NFC card under the value of the maximum permitted field, Hmax.

According to an exemplary embodiment of the present invention, the NFC-card detection circuit is configured to detect a type of a detected NFC card.

According to an exemplary embodiment of the present invention, the magnetic field detection circuit comprises a wire loop tuned with a parallel capacitor at the radio frequency band of NFC cards.

According to an exemplary embodiment of the present invention, the wire loop is coupled to an FR4 or flex foil PCB and wherein the wire loop is a separate loop used only for field sensing or shared with an existing NFC antenna.

A computer program performing the method of the present invention may be stored on a computer-readable medium. A computer-readable medium may be a floppy disk, a hard disk, a CD, a DVD, an USB (Universal Serial Bus) storage device, a RAM (Random Access Memory), a ROM (Read Only Memory) or an EPROM (Erasable Programmable Read Only Memory).

A computer-readable medium may also be a data communication network, for example the Internet, which allows downloading a program code.

The methods, systems, and devices described herein may be implemented as software in a Digital Signal Processor, DSP, in a micro-controller or in any other side-processor or as a hardware circuit within an application specific integrated circuit, ASIC, CPLD or FPGA.

The present invention can be implemented in digital electronic circuitry or in computer hardware, firmware, software, or in combinations thereof, for instance in available hardware of conventional medical imaging devices or in new hardware dedicated for processing the methods described herein.

### BRIEF DESCRIPTION OF THE DRAWINGS

A more complete appreciation of the invention and the attendant advantages thereof will be clearly understood by reference to the following schematic drawings, which are not to scale, wherein:
- Fig. 1: shows a schematic flowchart diagram for a method for preventing NFC card destruction during wireless charging operations according to an exemplary embodiment of the present invention;
- Fig. 2: shows a schematic diagram for a device for preventing NFC card destruction during wireless charging operations according to an exemplary embodiment of the present invention;
- Fig. 3: shows a schematic diagram for a device for preventing NFC card destruction during wireless charging operations according to an exemplary embodiment of the present invention; and
- Fig. 4: shows a schematic diagram for a device for preventing NFC card destruction during wireless charging operations according to an exemplary embodiment of the present invention.

### DETAILED DESCRIPTION OF EMBODIMENTS

The illustration in the drawings is purely schematic and does not intend to provide scaling relations or size information. In different drawings, similar or identical elements are provided with the same reference numerals.

Generally, identical parts, units, entities or steps are provided with the same reference symbols in the description.

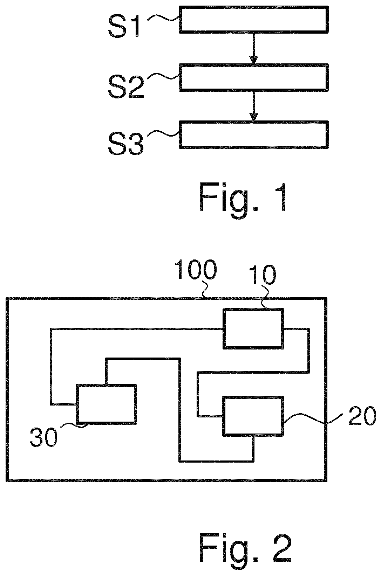

Fig. 1 shows a schematic flowchart diagram for a method for preventing NFC card destruction during wireless charging operations according to an exemplary embodiment of the present invention.

The method for preventing NFC card destruction during wireless charging operations comprises the following steps:
As a first step of the method, measuring S1, by means of a magnetic field detection circuit 10, an intensity of a magnetic field H generated by a wireless charging system is performed.

As a second step of the method, detecting S2 a presence of a NFC card is performed by means of a NFC-card detection circuit 20.

As a third step of the method, limiting S3, by means of a charging control circuit 30, a transmitted power of the wireless charging system is performed during wireless charging operations based on a maximum permitted field, wherein the maximum permitted field is related to the detected presence of the NFC card.

Fig. 2 shows a schematic diagram for a device for preventing NFC card destruction during wireless charging operations according to an exemplary embodiment of the present invention.

A device 100 for preventing NFC card destruction during wireless charging operations comprises a magnetic field detection circuit 10 and a NFC-card detection circuit 20 as well as a charging control circuit 30.

The magnetic field detection circuit 10 is configured to measure an intensity of a magnetic field H generated by a wireless charging system.

The NFC-card detection circuit 20 is configured to detect a presence of a NFC card.

The charging control circuit 30 is configured to limit a transmitted power of the wireless charging system during wireless charging operations based on a maximum permitted field, wherein the maximum permitted field is related to the detected presence of the NFC card.

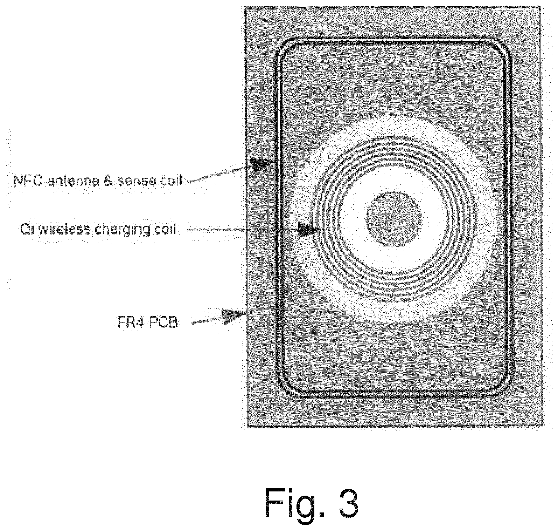

Fig. 3 shows a schematic diagram for a device for preventing NFC card destruction during wireless charging operations according to an exemplary embodiment of the present invention.

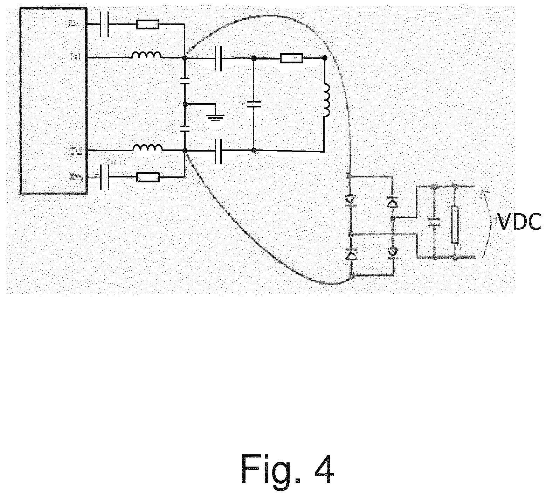

Fig. 4 shows a schematic diagram for a device for preventing NFC card destruction during wireless charging operations according to an exemplary embodiment of the present invention.

## Claims

1. A device (100) for preventing NFC card destruction during wireless charging operations, the device (100) comprising:
a magnetic field detection circuit (10), which is configured to measure an intensity of a magnetic field (H) generated by a wireless charging system, a NFC-card detection circuit (20), which is configured to detect a presence of a NFC card;
a charging control circuit (30), which is configured to limit a transmitted power of the wireless charging system during wireless charging operations based on a maximum permitted field, wherein the maximum permitted field is related to the detected presence of the NFC card,
**characterized by** a separate wire loop placed above a charging coil of the wireless charging system,
the separate wire loop to be used only for field sensing.

2. The device (100) according to claim 1,
wherein the charging control circuit (30) is configured, if no devices are detected by the NFC-card detection circuit, to start normal wireless charging operations; and
wherein the charging control circuit (30) is configured, if NFC cards are detected, to start limited wireless charging operations and the magnetic field detection circuit (10) is configured to measure, the intensity of the magnetic field induced at the radio frequency band of NFC cards.

3. The device (100) according to claim 1 or 2, wherein the charging control circuit (30) is configured, if the maximum permitted field is exceeded by the intensity of the magnetic field, to reduce the transmitted power of the wireless charger in order to have the magnetic field, which passes through the NFC card under the value of the maximum permitted field, Hmax.

4. The device (100) according to any one of the preceding claims,
wherein the NFC-card detection circuit (20) is configured to detect a type of a detected NFC card.

5. The device (100) according to any one of the preceding claims,
wherein magnetic field detection circuit (10) comprises a wire loop tuned with a parallel capacitor at the radio frequency band of NFC cards.

6. The device (100) according to claim 5,
wherein the wire loop is coupled to an FR4 or flex foil PCB and wherein the wire loop is a separate loop used only for field sensing or shared with an existing NFC antenna.

7. A method for preventing NFC card destruction during wireless charging operations, the method comprising the following steps of:
- Measuring (S1), by means of a magnetic field detection circuit (10), an intensity of a magnetic field (H) generated by a wireless charging system;
- Detecting (S2), by means of a NFC-card detection circuit (20), a presence of a NFC card; and
- Limiting (S3), by means of a charging control circuit (30), a transmitted power of the wireless charging system during wireless charging operations based on a maximum permitted field, wherein the maximum permitted field is related to the detected presence of the NFC card,
**characterized by** performing the Measuring (S1) with a separate wire loop placed above a charging coil of the wireless charging system, the separate wire loop to be used only for field sensing.

8. The method according to claim 7, further comprising the steps of:
if no devices are detected by the NFC-card detection circuit,
starting normal wireless charging operations;
if NFC cards are detected, starting limited wireless charging operations and measuring, the intensity of the magnetic field induced at the radio frequency band of NFC cards.

9. The method according to claim 7 or 8, further comprising the steps of:
if the maximum permitted field is exceeded by the intensity of the magnetic field, reducing the transmitted power of the wireless charger in order to have the magnetic field which passes through the NFC card under the value of the maximum permitted field.

## Patentansprüche

1. Vorrichtung (100) zum Verhindern der Zerstörung einer NFC-Karte während eines drahtlosen Ladevorgangs, wobei die Vorrichtung (100) aufweist:
eine Magnetfelderkennungsschaltung (10), die dazu ausgebildet ist, eine Intensität eines durch ein drahtloses Ladesystem erzeugten Magnetfeldes (H) zu messen,
eine NFC-Kartenerkennungsschaltung (20), die dazu ausgebildet ist, das Vorhandensein einer NFC-Karte zu erkennen;
eine Ladesteuerschaltung (30), die dazu ausgebildet ist,
eine übertragene Leistung des drahtlosen Ladesystems während drahtloser Ladevorgänge basierend auf einem maximal zulässigen Feld zu begrenzen, wobei das maximal zulässige Feld mit der erkannten Anwesenheit der NFC-Karte in Beziehung steht,
**gekennzeichnet durch** eine separate Drahtschleife, die über einer Ladespule des drahtlosen Ladesystems angebracht ist,
wobei die separate Drahtschleife nur zur Feldabtastung zu verwenden ist.

2. Vorrichtung (100) nach Anspruch 1,
wobei die Ladesteuerschaltung (30) dazu ausgebildet ist, normale drahtlose Ladevorgänge zu starten, wenn keine Vorrichtungen von der NFC-Kartenerkennungsschaltung erkannt werden; und
wobei die Ladesteuerschaltung (30) dazu ausgebildet ist, begrenzte drahtlose Ladevorgänge zu starten, wenn NFC-Karten erkannt werden, und die Magnetfelderkennungsschaltung (10) dazu ausgebildet ist, die Intensität des im Funkfrequenzband der NFC-Karten induzierten Magnetfeldes zu messen.

3. Vorrichtung (100) nach Anspruch 1 oder 2,
wobei die Ladesteuerschaltung (30) dazu ausgebildet ist, die übertragene Leistung des drahtlosen Ladegeräts zu reduzieren, wenn das maximal zulässige Feld durch die Intensität des Magnetfeldes überschritten wird, damit das Magnetfeld, das die NFC-Karte durchläuft, unter dem Wert des maximal zulässigen Feldes, Hmax, liegt.

4. Vorrichtung (100) nach einem der vorhergehenden Ansprüche,
wobei die NFC-Kartenerkennungsschaltung (20) dazu ausgebildet ist, einen Typ einer erkannten NFC-Karte zu erkennen.

5. Vorrichtung (100) nach einem der vorhergehenden Ansprüche,
wobei die Magnetfelderkennungsschaltung (10) eine Drahtschleife aufweist, die mit einem Parallelkondensator im Funkfrequenzband von NFC-Karten abgestimmt ist.

6. Vorrichtung (100) nach Anspruch 5,
wobei die Drahtschleife an eine FR4- oder Flexfolien-Leiterplatte gekoppelt ist und wobei die Drahtschleife eine separate Schleife ist, die nur für die Feldabtastung verwendet oder gemeinsam mit einer vorhandenen NFC-Antenne genutzt wird.

7. Verfahren zum Verhindern der Zerstörung einer NFC-Karte während eines drahtlosen Ladevorgangs, wobei das Verfahren die folgenden Schritte aufweist:
- Messen (S1) einer Intensität eines Magnetfeldes (H), das von einem drahtlosen Ladesystem erzeugt wird, mit Mitteln einer Magnetfelderkennungsschaltung (10);
- Erkennen (S2) eines Vorhandenseins einer NFC-Karte mit Mitteln einer NFC-Kartenerkennungsschaltung (20); und
- Begrenzen (S3) einer übertragenen Leistung des drahtlosen Ladesystems während drahtloser Ladevorgänge basierend auf einem maximal zulässigen Feld durch eine Ladesteuerschaltung (30), wobei das maximal zulässige Feld mit der erkannten Anwesenheit der NFC-Karte in Beziehung steht,
**gekennzeichnet durch** Durchführen des Messens (S1) mit einer separaten Drahtschleife, die über einer Ladespule des drahtlosen Ladesystems angebracht ist, wobei die separate Drahtschleife nur zur Feldabtastung zu verwenden ist.

8. Verfahren nach Anspruch 7, das ferner die folgenden Schritte aufweist:
normale drahtlose Ladevorgänge zu starten, wenn keine Vorrichtungen von der NFC-Kartenerkennungsschaltung erkannt werden;
Starten begrenzter drahtloser Ladevorgänge und Messen der Intensität des Magnetfeldes, das im Funkfrequenzband der NFC-Karten induziert wird, wenn NFC-Karten erkannt werden.

9. Verfahren nach Anspruch 7 oder 8, das ferner die folgenden Schritte aufweist:
Reduzieren der übertragenen Leistung des drahtlosen Ladegeräts, wenn das maximal zulässige Feld durch die Intensität des Magnetfelds überschritten wird, um das Magnetfeld, das die NFC-Karte durchläuft, unter dem Wert des maximal zulässigen Felds zu halten.

## Revendications

1. Dispositif (100) pour empêcher la destruction d'une carte NFC pendant des opérations de charge sans fil, le dispositif (100) comprenant :
un circuit de détection de champ magnétique (10), configuré pour mesurer une intensité d'un champ magnétique (H) généré par un système de charge sans fil,
un circuit de détection de carte NFC (20), configuré pour détecter une présence d'une carte NFC,
un circuit de commande de charge (30), configuré pour limiter une puissance transmise du système de charge sans fil pendant des opérations de charge sans fil sur la base d'un champ maximal admissible, le champ maximal admissible étant lié à la présence détectée de la carte NFC,
**caractérisé par** une boucle de fil distincte placée au-dessus d'une bobine de charge du système de charge sans fil, la boucle de fil distincte servant uniquement à la détection de champ.

2. Dispositif (100) selon la revendication 1,
dans lequel le circuit de commande de charge (30) est configuré, si aucun dispositif n'est détecté par le circuit de détection de carte NFC, pour lancer des opérations de charge sans fil normales ; et
dans lequel le circuit de commande de charge (30) est configuré, si des cartes NFC sont détectées, pour lancer des opérations de charge sans fil limitées, et le circuit de détection de champ magnétique (10) est configuré pour mesurer l'intensité du champ magnétique induit à la bande de fréquences radio de cartes NFC.

3. Dispositif (100) selon la revendication 1 ou 2,
dans lequel le circuit de commande de charge (30) est configuré, si l'intensité du champ magnétique dépasse le champ maximal admissible, pour réduire la puissance transmise du chargeur sans fil de façon à amener le champ magnétique traversant la carte NFC sous la valeur du champ maximal admissible, Hmax.

4. Dispositif (100) selon l'une quelconque des revendications précédentes,
dans lequel le circuit de détection de carte NFC (20) est configuré pour détecter un type d'une carte NFC détectée.

5. Dispositif (100) selon l'une quelconque des revendications précédentes,
dans lequel le circuit de détection de champ magnétique (10) comprend une boucle de fil accordée avec un condensateur en parallèle à la bande de fréquences radio de cartes NFC.

6. Dispositif (100) selon la revendication 5,
dans lequel la boucle de fil est couplée à une PCB de type FR4 ou à feuille souple, et dans lequel la boucle de fil est une boucle distincte servant uniquement à la détection de champ ou partagée avec une antenne NFC existante.

7. Procédé pour empêcher la destruction d'une carte NFC pendant des opérations de charge sans fil, le procédé comprenant les étapes suivantes :
- Mesure (S1), au moyen d'un circuit de détection de champ magnétique (10), d'une intensité d'un champ magnétique (H) généré par un système de charge sans fil ;
- Détection (S2), au moyen d'un circuit de détection de carte NFC (20), d'une présence d'une carte NFC ; et
- Limitation (S3), au moyen d'un circuit de commande de charge (30), d'une puissance transmise du système de charge sans fil pendant des opérations de charge sans fil sur la base d'un champ maximal admissible, le champ maximal admissible étant lié à la présence détectée de la carte NFC,
**caractérisé par** la réalisation de la Mesure (S1) avec une boucle de fil distincte placée au-dessus d'une bobine de charge du système de charge sans fil, la boucle de fil distincte servant uniquement à la détection de champ.

8. Procédé selon la revendication 7, comprenant en outre les étapes suivantes :
si aucun dispositif n'est détecté par le circuit de détection de carte NFC, lancement d'opérations de charge sans fil normales ;
si des cartes NFC sont détectées, lancement d'opérations de charge sans fil limitées et mesure de l'intensité du champ magnétique induit à la bande de fréquences radio de cartes NFC.

9. Procédé selon la revendication 7 ou 8, comprenant en outre les étapes suivantes :
si l'intensité du champ magnétique dépasse le champ maximal admissible, réduction de la puissance transmise du chargeur sans fil de façon à amener le champ magnétique traversant la carte NFC sous la valeur du champ maximal admissible.
